**Europäisches Patentamt**

**European Patent Office**

**Office européen des brevets**

(19)

(11) **EP 1 580 988 A2**

(12) # EUROPEAN PATENT APPLICATION

(43) Date of publication:
    **28.09.2005 Bulletin 2005/39**

(51) Int Cl.⁷: **H04N 5/335**

(21) Application number: **05102154.1**

(22) Date of filing: **18.03.2005**

(84) Designated Contracting States:
    **AT BE BG CH CY CZ DE DK EE ES FI FR GB GR
    HU IE IS IT LI LT LU MC NL PL PT RO SE SI SK TR**
    Designated Extension States:
    **AL BA HR LV MK YU**

(30) Priority: **22.03.2004 KR 2004019380**

(71) Applicant: **LG ELECTRONICS INC.**
    **Seoul 150-875 (KR)**

(72) Inventor: **Lee, Eun Sil**
    **Seoul (KR)**

(74) Representative: **Ekström, Nils**
    **Albihns Göteborg AB**
    **P.O. Box 142**
    **401 22 Göteborg (SE)**

(54) **Apparatus for digital video processing and method thereof**

(57)     The present invention provides an apparatus for digital video processing and method thereof, by which image quality can be enhanced through backlight correction of image acquired via a camera. In the present invention, a backlight parameter is extracted if a backlight correction command for a video, which was acquired from a camera or is previously stored in a memory, is given. And, the backlight is corrected in a manner of compensating luminance and color saturation of the acquired video using the extracted backlight parameter. Therefore, the present invention enhances image quality.

œ

EP 1 580 988 A2

## Description

## BACKGROUND OF THE INVENTION

### Field of the Invention

The present invention relates to an apparatus for digital video processing and method thereof, by which image quality can be enhanced through backlight correction of image acquired from a backlight environment.

### Discussion of the Related Art

Recently, functions of a potable terminal such as a digital camcorder, a camera phone, etc. are diversified and the portable terminal becomes smarter. Specifically, the terminal provided with a camera needs a function of processing video captured from the camera.

Such a portable terminal includes a video processor for processing image acquired from a camera. Some image may be acquired in a backlighted state according to a posture between a camera and a subject. In the backlighted state, a background of image is bright and the subject is dark. Hence, image quality may be degraded so that a user is unable to recognize the subject on the image correctly.

To solve such a problem, there are an exposure control method and a method using a video signal processing technology.

First of all, in the exposure control method, data for controlling lenses are extracted from an input image and performing backlight correction by controlling the lenses using the extracted data. In doing so, various metering methods for exposure control are used such as center-weighted metering of measuring luminance centering around a central part of an image, spot metering of measuring light of a fine portion of an image, segmentation/matrix metering of segmenting an image into several areas and then analyzing/computing each metering data of the segmented area to decide suitable exposure, etc.

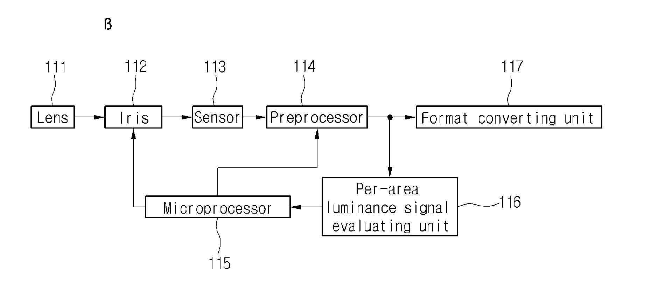

FIG. 1 is a block diagram of a video processor performing exposure control using a predefined area for backlight correction according to a related art.

Referring to FIG. 1, a video processor according to a related art consists of a lens/iris/sensor 111/112/113 receiving an optical signal from a subject to output a video signal converted to an electrical signal, a pre-processing unit 114 controlling a gain to enable the video signal outputted from the sensor 113 to be suitable for processing in a system and performing preprocessing such as a conversion to a dig ital video signal from the video signal and the like, a format converting unit 117 converting the digital video signal to a video format suitable for a standard specification, a per -area luminance signal evaluating unit 116 receiving the digital video sign al outputted from the preprocessing unit 114 by feedback, evaluating a per-area luminance level, and outputting a corresponding evaluation value, and a microprocessor 115 controlling an opening degree of the iris 112 by taking the evaluation value outputted from the per-area luminance signal evaluating unit 116 as a reference.

The video signal converted by the format converting unit 117 is displayed by a display unit (not shown in the drawing) to be stored in a memory. In this case, the memory is a frame memory.

Hence, the related art video processor can maintain luminance of an entire screen almost evenly.

Yet, in case that the video processor uses a previously determined area in a backlighted state, it is unable to cope with the previously determined area appropriately. Moreover, in case that a subject lies across several areas, backlight correction is not performed due to failure of backlight decision.

For instance, in the system of comparing subject luminance of central and peripheral areas, in case that a main subject lies across a central area of image and its peripheral area, such a case fails to be decided as backlight despite a backlighted state since a luminance difference between the central and peripheral areas is not great. Moreover, since the main subject, which is not always situated at the image central area, is situated at the peripheral area, the subject luminance of the peripheral area is lower than that of the central area in case of the backlighted state. Hence, it is unable to be decided as backlight despite the backlighted state.

And, it is unable to perform post-processing with the exposure control method on the captured image that was not decided as the backlight despite the backlighted state.

Meanwhile, as a backlight correcting method using a video processing technology, a backlighted video correction method using histogram equalization and look -up table was disclosed in Korean Patent Application No. 10 -1997-0038701.

Such a backlight correction method consists of separating a video luminance signal into a high luminance area and low luminance area according to a fixed backlight threshold, histogram-equalizing each of the separated luminance signals to store, and combining the separated luminance signals according to low/high luminance selection information to obtain a backlight-corrected luminance signal.

However, such a backlight correcting method separates the luminance signal according to the fixed backlight threshold, thereby failing to appropriately cope with the image -acquiring environment.

## SUMMARY OF THE INVENTION

Accordingly, the present invention is directed to an apparatus for digital video processing and method thereof that substantially obviates one or more problems due to limitations and disadvantages of the related art.

A first object of the present invention is to provide an apparatus for digital video processing and method thereof, by which image quality of video acquired in a backlighted state can be enhanced.

A second object of the present invention is to provide an apparatus for digital video processing and method thereof, backlight correction can be performed in a state that a video area is not decided in backlight decision.

A third object of the present invention is to provide an apparatus for digital video processing and method thereof, by which a brighter and clearer subject image can be obtained in a manner of performing backlight correction manually by a user according to a position or luminance situation of a subject in a backlighted environment or in a manner that a system automatically decides a backlighted state.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an apparatus for digital video processing according to the present invention includes a video acquiring unit acquiring a video and a backlight correcting unit extracting a backlight parameter from the video acquired by the video acquiring unit and correcting a backlight by compensating luminance and color saturation of the acquired video using the extracted backlight parameter.

In another aspect of the present invention, a method of digital video processing includes the steps of displaying a video in a preview mode, correcting a backlight by extracting a luminance level parameter and a color saturation level parameter from the video displayed in the preview mode and by compensating luminance and color saturation of each pixel based on the extracted parameters, and displaying the backlight-corrected video.

It is to be understood that both the for egoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a bock diagram of a digital video processor according to a related art;

FIG. 2 is a bock diagram of an apparatus for digital video processing according to an embodiment of the present invention;

FIG. 3 is a detailed block diagram of a backlight correction unit in FIG. 2;

FIG. 4 is a flowchart of a digital video processing method according to one embodiment of the present invention; and

FIG. 5 is a flowchart of a digital video processing method according to another embodiment of the present invention.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

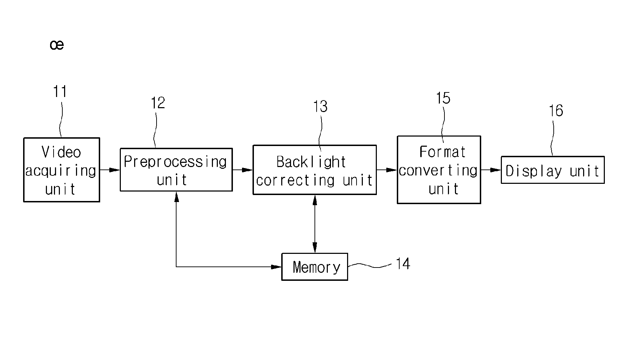

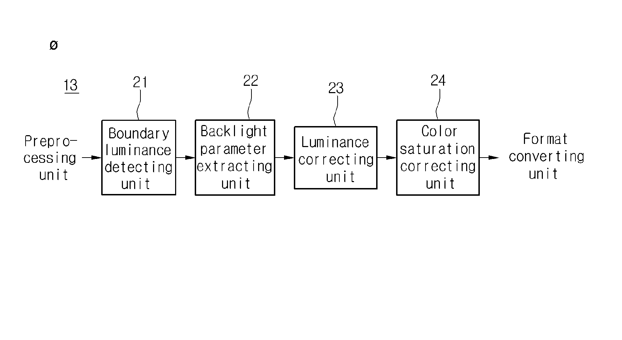

FIG. 2 is a bock diagram of an apparatus for digital video processing according to an embodiment of the present invention, and FIG. 3 is a detailed block diagram of a backlight correction unit in FIG. 2.

Referring to FIG. 2, an apparatus for digital video processing according to an embodiment of the present invention includes a video acquiring unit 11 acquiring video, a preprocessing unit 12 performing a gain control and digital conversion based on the acquired video, a backlight correction unit 13 extracting a backlight parameter from a video outputted from the preprocessing unit 12 and correcting luminance and color using the extracted backlight parameter, a forma t converting unit 15 converting a video outputted from the backlight correcting unit 13 to a predetermined format, and a display unit 16 displaying a video outputted from the format converting unit 15.

The apparatus includes a memory 14 storing the video outputted from the preprocessing unit 12. And, the backlight-corrected video can be stored in the memory 14.

The video acquiring unit 11 may include a camera module including a lens, iris, sensor and the like. An image sensor such as a CCD (charge coupled device), CMOS (complementary metal oxide semiconductor) and the like can be used as a sensor.

The preprocessing unit 12 performs gain control, digital conversion and the like as a preprocessing process for the video acquired from the video acquiring unit 11 .

In doing so, the video outputted from the preprocessing unit 12 can be directly stored in the memory 14 without performing a backlight correction process or can be inputted to the backlight correcting unit 13 for backlight correction.

The video acquired in a backlighted environment has the following characteristics. First of all, a boundary between a background area of video and a subject area is clearly identified. Secondly, a considerable luminance difference between the background and subject areas takes place centering on the boundary between the two areas. Thirdly, color saturation of the subject area is detected lower than that of the background area.

The backlight correcting unit 13 carries out backlight correction on the video outputted from the pre-processing unit 12. A standard format of the video backlight -corrected by the backlight correcting unit 13 is converted by the format converting unit 15. The video is then displayed via the display unit 16. In displaying the video acquired from the backlighted environment or previously stored in the memory for preview and the like, a user can decide whether to perform the backlight correction. And, the backlight-corrected video can be stored in the memory 14.

Preferably, the backlight correcting unit 12, which is situated between the preprocessing unit 12 and the format converting unit 15, performs backlight correction in backlight decision while a video area is not decided yet.

The backlight correcting unit 13, as shown in FIG. 3, includes a boundary luminance detecting unit 21, a backlight parameter extracting unit 22, a luminance correcting unit 23 and a color saturation correcting unit 24.

The boundary luminance detecting unit 21 separates the boundary between a bright background area and a dark subject area using the characteristics of the video acquired in the backlighted environment. Namely, the boundary luminance detecting unit 21 detects a luminance level between the two areas.

In other words, the boundary luminance detecting unit 21 searches the boundary between the bright background area and the dark subject area based on each luminance value of pixels of the acquired video and then computes the luminance level at the searched boundary. In this case, although there are various systems of computing the luminance level at the boundary between the bright background area and the dark subject area, the present invention proposes two of them.

First, all pixels within a video are searched for an area considerably differing in luminance difference from neigh bor pixels. In doing so, comparing squares of luminance values is more effective rather than comparing luminance values only. For instance, in case of luminance values '1' and '2', the luminance difference is not significant. Yet, squares of the luminance '1' and '2', i.e., '1' and '4' bring about a significant difference, whereby the area significantly differing from the neighbor pixels in luminance can be easily found.

Second, there is a method using 'between class variance'. This is to find a boundary between a bright background area and a dark subject area using luminance values only. Namely, the number for each luminance value is computed using a histogram and then a mean value of all luminance values is computed. By taking an arbitrary luminance value -K, a variance at a luminance level prior to the value-K and a variance at a luminance value after the value-K are respectively found. And, a value having a biggest K value resulting from adding the variance to the found value is found. Since the variance means discrete information, the luminance characteristics of the bright background area and the dark subject area can be well represented.

The backlight parameter extracting unit 22 extracts the backlight parameter by taking the luminance level detected at the boundary by the boundary luminance detecting unit 21 as a reference. Namely, by searching a representative value of the bright background area and a representative value of the dark subject area centering around the boundary between the bright background area and the subject area, the backlight parameter is decided.

The backlight parameter has a first luminance weight for compensating the dark subject area and a second luminance weight for compensating the bright background area. Preferably, the first luminance weight is set greater than the second luminance weight at least. As the luminances of the dark subject and bright background areas are corrected according to the first and second luminance weights, respectively, the dark subject area needs to be corrected brighter using the first luminance weight whereas the bright background area needs to be corrected darker using the second luminance weight.

The first and second luminance weights may be fixed or variable. Namely, the first and second luminance we ights are fixedly used for each video to correct the brightness of each area or are variable according to a degree of brightness of each video to correct the brightness of each area. In case that the first and second luminance weights are variable, each of the first and second luminance weights can be differently applied to the corresponding video.

And, the backlight parameter can be represented as a luminance level parameter if associated with luminance. Alternatively, the backlight parameter can be divide d into a luminance level parameter and a color saturation level parameter if associated with luminance and color saturation.

The color saturation level parameter, which is decided for color saturation correction, may be not mandatory but optional. Namely, in case of video needing color saturation correction inevitably, the correction is made by the color saturation level parameter. The color saturation level parameter can be decided from luminance values. In general, the darker the brightness becomes, a value of the color saturation becomes lower in proportion. And, the color saturation can be raised in proportion to the brightness. Since the color saturation correction is not necessary for the bright background area, the corresponding color saturation level parameter is applied to the dark subject area.

The color saturation level parameter has a color saturation weight found by a ratio Y'/Y of a new luminance level Y' to a previous luminance level Y.

The luminance correcting unit 23 corrects the dark subject area and the bright background area according to the luminance level parameter decided by the backlight parameter deciding unit 22.

For instance, it is assumed that a luminance level at the boundary between the dark subject area and the bright background area is 'A', a luminance level indicating how much the brightness at the boundary luminance level 'A' is raised is 'b', a luminance level of a pixel to be compensated is 'c', and a luminance weight for compensation is 'D'.

From the luminance level variable s A, B, C and D, a luminance value in each area can be corrected by Formula 1.

[Formula 1]

$$Y1=[(B-C)*(Y-C)]/(A-C)+C$$

$$Y'=Y1+[(B-Y1)*(Y1-C)*D]]/(B-C),$$

where Y is previous brightness, Y' is new corrected brightness, and Y1 is a temporary variable.

Since a maximum luminance level -B that can be maximally raised at the boundary luminance level -A and the luminance level-C of the pixel to be compensated are known values, the luminance correction for each area can be achieved only if the luminance level-A at the boundary between the dark subject area and the bright background area and the luminance weight -D are found. In doing so, a first luminance weight can be applied to the dark subject area and a second luminance weight can be applied to the bright background area.

If color saturation correction is needed to the dark subject area of the acquired video, the backlight parameter deciding unit 22 decides a color saturation level parameter having a color saturation weight and the color saturation correcting unit 24 then corrects color saturation of the dark subject area using the decided color saturation level parameter.

For instance, if a video format is a YUV format and if a color saturation level parameter having a color saturation weight Y'/Y in a dark subject area is decided, by multiplying the color saturation weight by a corresponding color U or V in the dark subject area according to Formula 2, color saturation can be achieved.

[Formula 2]

$$U'=(Y'/Y)*U$$

$$V'=(Y'/Y)*V,$$

where U or V is a previous color, U' or V' is a new corrected color, and Y'/Y indicates a color saturation weight.

A video processing method in the above -configured digital video processing apparatus is explained in detail as follows.

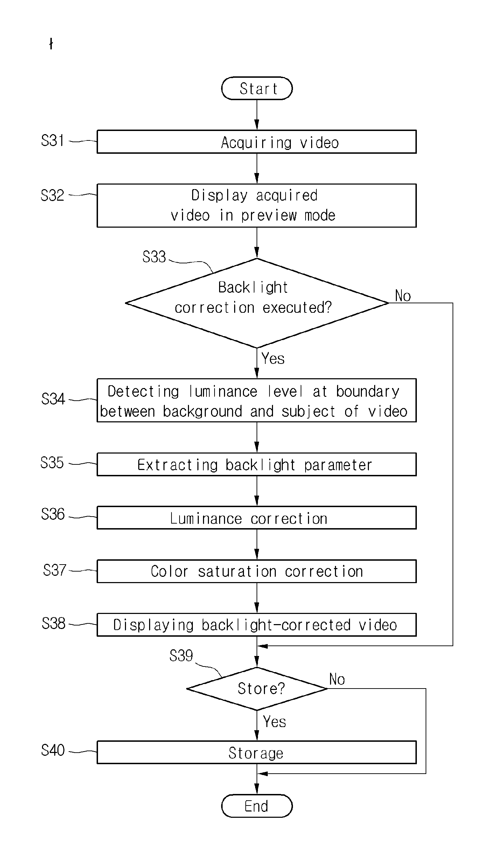

FIG. 4 is a flowchart of a method of performing backlight correction in a video processing apparatus according to one preferred embodiment of the present invention.

Referring to FIG. 4, a video captured by a camera is acquired and the acquired video is then displayed in a preview mode (S31, S32). In doing so, if the displayed video was acquired in a backlighted environment, a subject area is dark but a background area is bright to appear.

If backlight correction is executed in a preview mode by a user (S33), a boundary between the dark subject area and the bright background area is extracted based on a luminance value of each pixel of the acquired video. And, a luminance level of the extracted boundary is detected (S34).

By taking the detected luminance level as a reference, a backlight parameter for the dark subject and bright background areas is decided (S35).

In doing so, in the backlight parameter, a luminance level parameter and a color saturation level parameter are found based on the luminance level at the boundary between the subject and background. The luminance level parameter has a first luminance weight for compensating the dark subject area and a second luminance weight for compensating the bright background area, based on the luminance level at the boundary between the subject and background. And, the color saturat ion level parameter has a color saturation weight found by a ratio of a new luminance level to a previous luminance level in the dark subject area. The color saturation level parameter can be used in case that compensation is needed due to the considerably lowered color saturation in the dark subject area. Otherwise, the color saturation level parameter may not be used.

Subsequently, luminance correction is carried out using the luminance level parameter and color saturation correction is carried out using the color saturation level parameter (S36, S37). As the luminance and color saturation are corrected, backlight correction for the corresponding video is completed.

And, the backlight-corrected video is displayed (S38). If a user selects a video storage wh ile the video is displayed, the backlight-corrected video is stored (S40). Hence, the video acquired in the backlighted environment is directly backlight-corrected in a preview mode to be stored.

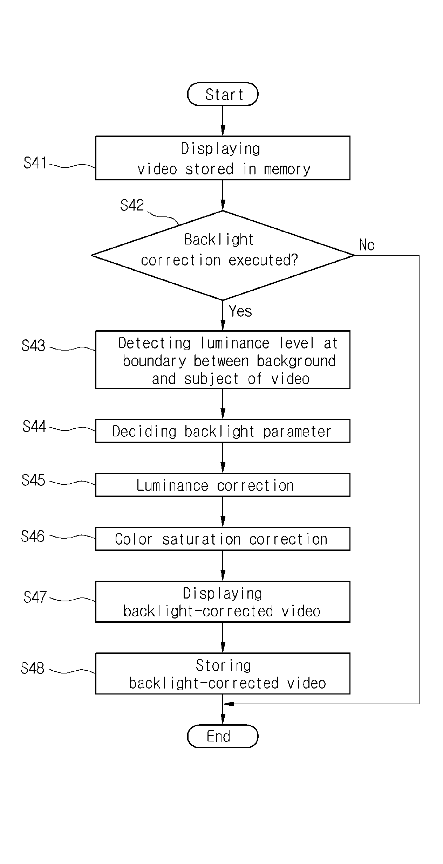

FIG. 5 is a flowchart of a method of performing backlight correction in a video processing method according to one preferred embodiment of the present invention.

Referring to FIG. 5, once a user selects a video stored in a memory, the selected video is displayed. If the user executes backlight correction, a luminance level at a boundary between a background and subject of the video is detected (S43).

Since backlight correction is not performed on the video which was acquired in a backlighted environment to be stored in the memory, a subject area appears dark while a background area appears bright. A boundary between the dark subject area and the bright background area is found based on luminance values of pixels of the displayed video, and the luminance level at the found boundary between the two areas is detected.

A backlight parameter for the dark subject and bright background areas is decided based on the detected luminance level (S44).

In doing so, as the backlight parameter, a luminance level parameter and a color saturation level parameter are found based on the luminance level at the boundary between the subject and background. The luminance level parameter has a first luminance weight for compensating the dark subject area and a second luminance weight for compensating the bright background area, based on the luminance level at the boundary between the subject and background.

And, the color saturation level parameter has a color saturation weight found by a ratio of a new luminance level to a previous luminance level in the dark subject area. The color saturation level parameter can be used in case that compensation is needed due to the considerably lowered color saturation in the dark subject area. Otherwise, the color saturation level parameter may not be used.

Subsequently, luminance correction is carried out using the luminance level parameter and color saturation correction is carried out using the color saturation level parameter (S45, S46). As the luminance and color saturation are corrected, backlight correction for the corresponding video is completed.

And, the backlight-corrected video is displayed again (S47). The backlight-corrected video can be updated to be stored in the position of the video according to user's necessity (S48). Hence, the video acquired in the backlighted environment is not directly backlight-corrected. Instead, the video is temporarily stored and is then updated by backlight correction to be stored if necessary.

By the digital video processing apparatus and method according to the present invention, the image quality in the backlighted state can be enhanced in a manner of finding the luminance level at the boundary between the dark subject area and the bright background area from the video acquired from the backlighted environment and correcting the luminance and the color saturation according to the backlight parameter of each area based on the luminance level value.

The backlight correction can be automatically performed after a presence or non-presence of backlight of the video acquired from the backlighted environment has been automatically decided. And, a user can also allow the backlight correction to be manually performed on the video. Moreover, the backlight correction can be performed regardless of a previously acquired video or a currently acquired video.

By the present invention, backlight correction can be performed using the backlight parameter without deciding the dark subject area and the bright background area previously.

By performing backlight correction to automatically cope with a location or brightness status of the subject of the video in the backlighted environment, a brighter and clearer subject can be obtained.

By allowing a user to perform backlight correction on the acquired video or the video stored in the memory, the user can perform the backlight correction on a specific video.

It will be apparent to those skilled in the art that various modifications and variations can be made in the present invention. Thus, it is intended that the present invention covers the modifications and variations of this invention provided they come within the scope of the appended claims and their equivalents.

## Claims

1. An apparatus for digital video processing, comprising:

   a video acquiring unit acquiring a video; and
   a backlight correcting unit extracting a backlight parameter from the video acquired by the video acquiring unit and correcting a backlight by compensating luminance and color saturation of the acquired video using the extracted backlight parameter.

2. The apparatus of claim 1, wherein the backlight correction of the acquired video is performed by a user.

3. The apparatus of claim 1, further comprising a pre-processing unit performing a gain control of a video signal acquired from the video acquiring unit and converting the video signal to a digital signal to output to the backlight correcting unit.

4. The apparatus of claim 1, wherein a video after/before the backlight correction is confirmed to a user through a display unit.

5. The apparatus of claim 1, further comprising a storage means for storing the backlight-corrected video and the video acquired by the video acquiring unit.

**6.** The apparatus of claim 1, the backlight correcting unit comprising:

a boundary luminance detecting unit computing a luminance level at a boundary between a dark subj ect area and a bright background area of the acquired video;

a backlight parameter detecting unit extracting the backlight parameter for the dark subject and bright background areas based on the luminance level of the computed boundary; and

a luminance correcting unit correcting the luminance according to the decided backlight parameter.

**7.** The apparatus of claim 1, wherein the backlight parameter includes a luminance level parameter indicating a weight compensation degree of the luminance and a color saturation level parameter indicating a compensation degree of the color saturation.

**8.** The apparatus of claim 7, further comprising a color saturation correcting unit correcting the color saturation according to the color saturation level parameter.

**9.** The apparatus of claim 6, wherein the backlight parameter has a luminance weight for compensating the luminance according to a darkness degree of the subject area and a brightness degree of the background area.

**10.** The apparatus of claim 9, wherein the luminance weight includes a first luminance weight compensating a relatively great amount of the luminance of the dark subject area and a second luminance weight compensating a relatively small amount of the luminance of the bright background area.

**11.** The apparatus of claim 8, wherein the color saturation level parameter is applied to the dark subject area only.

**12.** The apparatus of claim 8, wherein the color saturation level parameter has a color saturation weight compensating the color saturation of a pixel by a ratio of a new luminance level to a previous luminance level.

**13.** A method of digital video processing, comprising the steps of:

displaying a video in a preview mode;

correcting a backlight by extracting a luminance level parameter and a color saturation level parameter from the video displayed in the preview mode and by compensating luminance and color saturation of each pixel based on the extracted parameters; and

displaying the backlight-corrected video.

**14.** The method of claim 13, wherein the displayed video is the video acquired from a camera.

**15.** The method of claim 13, wherein the displayed video is the video that is previously stored in a memory and corresponds to the video that is not backlight-corrected.

**16.** The method of claim 13, the backlight correcting step comprising the steps of:

computing a luminance level at a boundary between a dark subject area and a bright background area based on luminance values of pixels of the video;

deciding a luminance level parameter and a color saturation level parameter of each of the dark subject and bright background areas based on the computed luminance at the boundary;

correcting the luminance of the dark subject and bright background areas according to the luminance level parameter; and

correcting the color saturation according to the color saturation level parameter.

**17.** The method of claim 16, wherein the luminance level parameter has a first luminance weight for compensation of the dark subject area and a second luminance weight for compensation of the bright background area.

**18.** The method of claim 16, wherein the color saturation level parameter is applied to the dark subject area only.

**19.** The method of claim 16, wherein the color saturation level parameter has a color saturation weight compensating the color saturation of a pixel by a ratio of a new luminance level to a previous luminance level.

**20.** The method of claim 16, further comprising a step of if the video is displayed in the preview mode, allowing a user to execute backlight correction of the video.

ß

œ

Ø

13

21  22  23  24

Prepro-
cessing
unit → | Boundary
luminance
detecting
unit | → | Backlight
parameter
extracting
unit | → | Luminance
correcting
unit | → | Color
saturation
correcting
unit | → Format
converting
unit

Start

S31 — Acquiring video

S32 — Display acquired video in preview mode

S33 — Backlight correction executed? — No

Yes

S34 — Detecting luminance level at boundary between background and subject of video

S35 — Extracting backlight parameter

S36 — Luminance correction

S37 — Color saturation correction

S38 — Displaying backlight-corrected video

S39 — Store? — No

Yes

S40 — Storage

End

Start

S41 — Displaying video stored in memory

S42 — Backlight correction executed? — No

Yes

S43 — Detecting luminance level at boundary between background and subject of video

S44 — Deciding backlight parameter

S45 — Luminance correction

S46 — Color saturation correction

S47 — Displaying backlight-corrected video

S48 — Storing backlight-corrected video

End